# EUROPÄISCHE PATENTSCHRIFT

(11) **EP 3 734 037 B1**
(45) Veröffentlichungstag und Bekanntmachung des Hinweises auf die Patenterteilung: **29.12.2021**
(21) Anmeldenummer: 20162564.7
(22) Anmeldetag: 12.03.2020
(51) Int. Cl.: F01N 13/18

(54) **GEHÄUSE FÜR EINE ABGASANLAGE EINER BRENNKRAFTMASCHINE EINES FAHRZEUGS**
HOUSING FOR AN EXHAUST SYSTEM OF A COMBUSTION ENGINE OF A VEHICLE
BOÎTIER POUR UNE INSTALLATION D'ÉCHAPPEMENT D'UN MOTEUR À COMBUSTION INTERNE D'UN VÉHICULE

(30) Priorität: 29.04.2019 DE 102019110947
(43) Veröffentlichungstag der Anmeldung: 04.11.2020
(73) Patentinhaber: Purem GmbH, 66539 Neunkirchen (DE)
(72) Erfinder: Hänisch, Jan, 73765 Neuhausen (DE)
(74) Vertreter: Ruttensperger Lachnit Trossin Gomoll

(56) Entgegenhaltungen:
- CN-A- 108 223 083
- DE-A1- 2 909 535
- DE-A1-102005 044 376
- DE-U1- 8 715 289
- GB-A- 1 485 988

## Beschreibung

Die vorliegende Erfindung betrifft ein Gehäuse für eine Abgasanlage einer Brennkraftmaschine eines Fahrzeugs.

Aus der DE 10 2017 108 244 A1 ist ein mit zwei Halbschalen ausgebildetes Gehäuse für eine Abgasanlage einer Brennkraftmaschine bekannt. Jede der beiden Halbschalen bildet einen Gehäuseschalenbereich. In zwei Verbindungsbereichen sind die beiden Halbschalen bzw. Gehäuseschalenbereiche miteinander verbunden und können somit ein eine Komponente einer Abgasanlage, wie zum Beispiel einen Katalysator oder dergleichen, umgebend angeordnetes Isoliergehäuse bilden.

In den beiden Verbindungsbereichen weist jeder der Gehäuseschalenbereiche einen in Richtung von einem Gehäuseinnenraum nach außen weg gebogenen Falzrandbereich auf. Mit diesen Falzrandbereichen liegen die beiden Gehäuseschalen in jedem der beiden Verbindungsbereiche aneinander an. An jedem Falzrandbereich sind in einer Gehäuselängsrichtung aufeinander folgend Umfalzabschnitte ausgebildet, so dass die in aneinander anliegenden Falzrandbereichen vorgesehenen Umfalzabschnitte verzahnungsartig ineinander eingreifen und nach dem Umfalzen derselben eine Formschlussverbindung zwischen den beiden Gehäuseschalenbereichen erzeugen.

Ein Gehäuse gemäß dem Oberbegriff des Anspruchs 1 ist aus der DE 8715 289 U1 bekannt. Bei diesem bekannten Gehäuse sind in Umfangsrichtung aneinander angrenzende Gehäuseschalenbereiche durch eine erste Eingriffsformation bereitstellende Eingriffslaschen und eine zweite Eingriffsformation bereitstellende und diese Eingriffslaschen aufnehmende Eingriffsöffnungen miteinander verbunden. Die Eingriffsöffnungen sind an einem der beiden miteinander zu verbindenden Gehäuseschalenbereichen in Umfangsrichtung offen und weisen, ausgehend von dem in Umfangsrichtung offenen Bereich derselben, eine sich T-förmig erweiternde Struktur auf. Die Eingriffslaschen weisen einen von dem anderen der beiden Gehäuseschalenbereiche in Umfangsrichtung sich erstreckenden ersten Laschenabschnitt auf, an welchen ein zum ersten Laschenabschnitt sich quer erstreckender und somit zu einer T-förmigen Struktur der Eingriffslaschen führender zweiter Laschenabschnitt anschließt. Bei in die Eingriffsöffnungen eingreifenden Eingriffslaschen hintergreifen die zweiten Laschenabschnitt den die Eingriffsöffnungen aufweisenden Gehäuseschalenabschnitt in Umfangsrichtung und sorgen somit für einen Zusammenhalt der beiden Gehäuseschalenabschnitte in Umfangsrichtung.

Aus der CN 108 223 083 A ist ein Gehäuse bekannt, bei welchem an einem von zwei miteinander zu verbindenden Gehäuseschalenbereichen nach außen vorstehende Rastvorsprünge vorgesehen sind und am anderen der beiden miteinander zu verbindenden Gehäuseschalenbereiche von außen über die Rastvorsprünge führbare Rastlaschen vorgesehen sind. Bei von innen her in die Rastlaschen eingreifenden Rastvorsprüngen sind die beiden Gehäuseschalenbereiche miteinander verbunden.

Es ist die Aufgabe der vorliegenden Erfindung, ein Gehäuse für eine Abgasanlage einer Brennkraftmaschine eines Fahrzeugs, vorzusehen, in welchem zwei Gehäuseschalenbereiche bei kompakter Bauart des Gehäuses stabil miteinander verbunden werden können.

Erfindungsgemäß wird diese Aufgabe gelöst durch ein Gehäuse für eine Abgasanlage einer Brennkraftmaschine eines Fahrzeugs, gemäß Anspruch 1. Das Gehäuse umfasst wenigstens zwei einen Gehäuseinnenraum umgrenzende und in wenigstens einem Verbindungsbereich miteinander verbundene Gehäuseschalenbereiche, wobei ein erster Gehäuseschalenbereich der beiden in dem wenigstens einen Verbindungsbereich miteinander verbundenen Gehäuseschalenbereiche in dem wenigstens einen Verbindungsbereich eine erste Eingriffsformation aufweist und ein zweiter Gehäuseschalenbereich der beiden in dem wenigstens einen Verbindungsbereich miteinander verbundenen Gehäuseschalenbereiche in dem wenigstens einen Verbindungsbereich eine mit der ersten Eingriffsformation in Formschlusseingriff stehende oder bringbare zweite Eingriffsformation aufweist, wobei die erste Eingriffsformation wenigstens eine Eingriffsöffnung umfasst und die zweite Eingriffsformation in Zuordnung zu der wenigstens einen Eingriffsöffnung der ersten Eingriffsformation wenigstens eine in die wenigstens eine Eingriffsöffnung eingreifende Eingriffslasche umfasst.

Durch das Vorsehen von in Eingriffsöffnungen eingreifenden und dabei eine Formschlussverbindung herstellenden Eingriffslaschen wird eine stabile Anbindung der beiden Gehäuseschalenbereiche aneinander gewährleistet, ohne dass dazu die beim Stand der Technik bekannten, nach außen hervorstehenden Falzrandbereiche vorgesehen werden müssen. Der Formschluss kann damit ohne den aufwendigen Falzprozess erhalten werden.

Um beim Zusammenbau der beiden Gehäuseschalenbereiche die Verbindung einfach herstellen zu können, ist die wenigstens eine Eingriffslasche von einer von dem Gehäuseinnenraum abgewandt orientierten Außenseite des ersten Gehäuseschalenbereichs her in die zugeordnete Eingriffsöffnung eingreifend positioniert oder positionierbar.

Der einen festen Zusammenhalt der beiden Gehäuseschalenbereiche gewährleistende Formschluss nach Art einer Rastverbindung wird dadurch einfach und zuverlässig wirkend erhalten, dass die wenigstens eine Eingriffslasche einen an den zweiten Gehäuseschalenbereich angebundenen und bei miteinander verbundenen Gehäuseschalenbereichen durch die zugeordnete Eingriffsöffnung hindurchgreifenden ersten Laschenabschnitt umfasst und einen an den ersten Laschenabschnitt anschließenden und den ersten Gehäuseschalenbereich hintergreifenden zweiten Laschenabschnitt umfasst.

Um diese hintergreifende Formschlusswechselwirkung bereitstellen zu können, ist vorgesehen, dass der erste Laschenabschnitt ausgehend von einem ersten Anbindungsbereich des ersten Laschenabschnitts an den zweiten Gehäuseschalenbereich sich in Richtung auf den Gehäuseinnenraum zu erstreckt, und dass der zweite Laschenabschnitt ausgehend von einem zweiten Anbindungsbereich des zweiten Laschenabschnitts an den ersten Laschenabschnitt sich näherungsweise in Richtung auf den ersten Anbindungsbereich zu erstreckt.

Dabei ist es besonders vorteilhaft, wenn der erste Laschenabschnitt ausgehend vom ersten Anbindungsbereich eine größere Erstreckungslänge aufweist, als der zweite Laschenabschnitt ausgehend vom zweiten Anbindungsbereich. Somit wird berücksichtigt, dass der erste Laschenabschnitt durch den ersten Gehäuseschalenbereich beispielsweise von der Außenseite her hindurchgreift, während der zweite Laschenabschnitt den ersten Gehäuseschalenbereich beispielsweise an dessen Innenseite hintergreift, also nicht auch durch die Eingriffsöffnung hindurchragt.

Zum Bereitstellen der den ersten Gehäuseschalenbereich hintergreifenden Positionierung des zweiten Laschenabschnitts können bei durch die zugeordnete Eingriffsöffnung hindurchgreifendem erstem Laschenabschnitt der erste Laschenabschnitt und der zweite Laschenabschnitt sich ausgehend vom zweiten Anbindungsbereich bezüglich einander divergierend erstrecken. Beispielsweise können die beiden Laschenabschnitte eine im Wesentlichen V-förmige Konfiguration der Eingriffslasche bereitstellen

Um einerseits eine Eingriffslasche durch die dieser zugeordnete Eingriffsöffnung hindurchführen zu können, andererseits aber die den ersten Gehäuseschalenbereich hintergreifende Positionierung des zweiten Laschenabschnitts erreichen zu können, wird vorgeschlagen, dass der erste Laschenabschnitt und der zweite Laschenabschnitt im zweiten Anbindungsbereich derart elastisch federnd aneinander angebunden sind oder/und dass der erste Laschenabschnitt oder/und der zweite Laschenabschnitt derart elastisch federnd ausgebildet ist, dass zum Einführen der Eingriffslasche in die zugeordnete Eingriffsöffnung die beiden Laschenabschnitte aufeinander zu bewegbar sind und bei in die zugeordnete Eingriffsöffnung eingeführter Eingriffslasche die beiden Laschenabschnitte in eine derartige Positionierung bezüglich einander kommen, dass der zweite Laschenabschnitt den ersten Gehäuseschalenbereich an seiner dem Gehäuseinnenraum zugewandten Innenseite hintergreift.

Für eine stabile Verbindung der beiden Gehäuseschalenbereiche miteinander kann die erste Eingriffsformation eine Mehrzahl von in Richtung einer Gehäuselängsachse aufeinander folgenden Eingriffsöffnungen umfassen, und die zweite Eingriffsformation kann eine Mehrzahl von in Richtung der Gehäuselängsachse aufeinander folgenden Eingriffslaschen umfassen.

Eine definierte Anlage der beiden Gehäuseschalenbereiche aneinander kann dadurch unterstützt werden, dass in dem wenigstens einen Verbindungsbereich der erste Gehäuseschalenbereich einen von einer Gehäuseumfangswandung des ersten Gehäuseschalenbereichs in Richtung zum Gehäuseinnenraum sich erstreckenden ersten Anlagerand aufweist, oder/und dass in dem wenigstens einen Verbindungsbereich der zweite Gehäuseschalenbereich einen von einer Gehäuseumfangswandung des zweiten Gehäuseschalenbereichs in Richtung zum Gehäuseinnenraum sich erstreckenden zweiten Anlagerand aufweist.

Eine Bauraum sparende Ausgestaltung des erfindungsgemäßen Gehäuses kann dadurch unterstützt werden, dass in dem wenigstens einen Verbindungsbereich die wenigstens eine Eingriffsöffnung der ersten Eingriffsformation in einer Gehäuseumfangswandung des ersten Gehäuseschalenbereichs vorgesehen ist.

Beispielsweise können bei dem erfindungsgemäßen Gehäuse der erste Gehäuseschalenbereich und der zweite Gehäuseschalenbereich in zwei im Wesentlichen in Richtung einer Gehäuselängsachse sich erstreckenden Verbindungsbereichen miteinander verbunden sein. Dies bedeutet, dass jeder der beiden Gehäuseschalenbereiche nach Art einer Halbschale aufgebaut sein kann, was nicht zwingend bedeutet, dass die beiden Gehäuseschalenbereiche zueinander identisch oder gleich groß aufgebaut sein müssen.

Die Erfindung betrifft ferner eine Abgasanlage für eine Brennkraftmaschine, insbesondere für ein Fahrzeug, umfassend eine vom einem Gehäuse nach einem der vorangehenden Ansprüche umgebene Abgasbehandlungseinheit.

Die vorliegende Erfindung wird nachfolgend mit Bezug auf die beiliegenden Figuren detailliert beschrieben. Es zeigt:
- Fig. 1: einen Teil eines ersten Gehäuseschalenbereichs eines Gehäuses für eine Abgasbehandlungseinheit;
- Fig. 2: einen Teil eines mit dem ersten Gehäuseschalenbereich zu verbindenden zweiten Gehäuseschalenbereichs für ein Gehäuse einer Abgasbehandlungseinheit;
- Fig. 3: die beiden in den Fig. 1 und 2 gezeigten und in einem Verbindungsbereich miteinander verbundenen Gehäuseschalenbereiche.

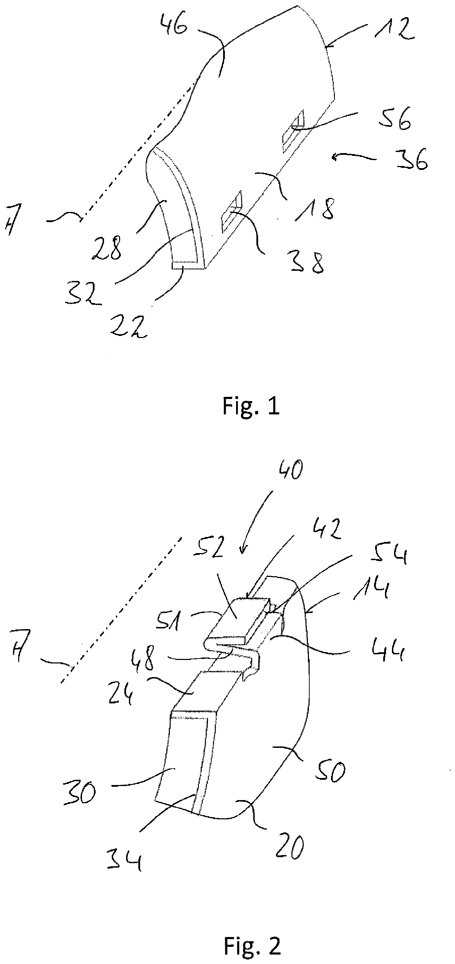

Die Fig. 1 bis 3 zeigen Teile eines allgemein mit 10 bezeichneten Gehäuses, welches als Isoliergehäuse eine Abgasbehandlungseinheit in einer Abgasanlage einer Brennkraftmaschine eines Fahrzeugs umgebend angeordnet werden kann. Eine derartige Abgasbehandlungseinheit kann beispielsweise ein Katalysator oder dergleichen sein.

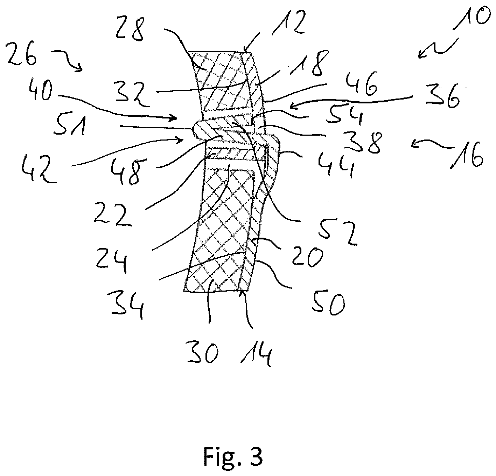

Das Gehäuse 10 umfasst zwei in den Fig. 1 und 2 dargestellte Gehäuseschalenbereiche 12, 14. Jeder dieser beiden Gehäuseschalenbereiche 12, 14 kann nach Art einer Halbschale sich in Richtung einer Gehäuselängsachse A erstreckend bzw. diese teilweise umgebend ausgebildet sein, so dass die beiden Gehäuseschalenbereiche 12, 14 in zwei Verbindungsbereichen zum Zusammensetzen des Gehäuses 10 miteinander verbunden werden. Von diesen beiden Verbindungsbereichen ist in Fig. 3 der Verbindungsbereich 16 erkennbar.

Jeder der beiden Gehäuseschalenbereiche 12, 14 ist beispielsweise aus einem Blechrohling geformt und weist eine Gehäuseumfangswandung 18, 20 auf. Im Verbindungsbereich 16, vorzugsweise in jedem Verbindungsbereich, sind von den Gehäuseumfangswandungen 18, 20 jeweilige Anlageränder 22, 24 in Richtung zu einem von den Gehäuseumfangswandungen 18, 20 umgebenen Gehäuseinnenraum 26 abgebogen. Die zum Gehäuseinnenraum 26 hin sich erstreckenden Anlageränder 22, 24 bilden jeweilige Anlageflächen, mit welchen die beiden Gehäuseschalenbereiche 12, 14 stabil aneinander anliegen können.

Insbesondere dann, wenn das Gehäuse 10 als Isoliergehäuse eingesetzt werden soll, kann an der Innenseite der beiden Gehäuseschalenbereiche 12, 14 jeweils Isoliermaterial 28, 30 vorgesehen sein. Dieses kann beispielsweise an eine jeweilige Innenseite 32, 34 der Gehäuseumfangswandungen 18, 20 der beiden Gehäuseschalen 12, 14 durch Verklebung oder dergleichen angebunden sein, kann alternativ aber daran nur anliegend vorgesehen sein.

Um eine feste Verbindung der beiden Gehäuseschalenbereiche 12, 14 bereitstellen zu können, ist an der ersten Gehäuseschale 12 eine allgemein mit 36 bezeichnete erste Eingriffsformation vorgesehen. Diese umfasst in der Gehäuseumfangswandung 18 der ersten Gehäuseschale 12 eine Mehrzahl von in Richtung der Gehäuselängsachse A aufeinander folgenden und beispielsweise in dieser Richtung auch langgestreckten Eingriffsöffnungen 38. Wie die Fig. 1 und 3 dies zeigen, sind die Eingriffsöffnungen 38 in dem an den Anlagerand 22 des ersten Gehäuseschalenbereichs 12 angrenzenden Bereich der Gehäuseumfangswandung 18 vorgesehen.

Am zweiten Gehäuseschalenbereich 14 ist eine zweite Eingriffsformation 40 vorgesehen. Diese umfasst in Zuordnung zu den Eingriffsöffnungen 38 der ersten Eingriffsformation 36 eine Mehrzahl von der Gehäuselängsachse A aufeinanderfolgenden Eingriffslaschen 42. Insbesondere kann für jede Eingriffsöffnung 38 der ersten Eingriffsformation 36 eine Eingriffslasche 42 der zweiten Eingriffsformation 40 vorgesehen sein. Dabei können die Eingriffslaschen 42 in Richtung der Gehäuselängsachse A eine derartige Erstreckung aufweisen, dass sie in Richtung der Gehäuselängsachse A im Wesentlichen spielfrei in die zugeordneten Eingriffsöffnungen 38 eingreifend positioniert werden können. Das heißt, die Eingriffslaschen 42 weisen in Richtung der Gehäuselängsachsen A im Wesentlichen die gleiche bzw. eine geringfügig kürzere Erstreckungslänge auf, als die diesen jeweils zugeordneten Eingriffsöffnungen 38.

Die in den Fig. 2 und 3 erkennbare Eingriffslasche 42 ist in einem ersten Anbindungsbereich 44 an die Gehäuseumfangswandung 20 des zweiten Gehäuseschalenbereichs 14 angebunden, insbesondere damit integral ausgebildet. Dabei kann in dem ersten Anbindungsbereich 40 die Gehäuseumfangswandung 20 nach außen, also in Richtung vom Gehäuseinnenraum 26 weg verformt sein, so dass der erste Anbindungsbereich 44 die Gehäuseumfangswandung 18 des ersten Gehäuseschalenbereichs 12 an seiner vom Gehäuseinnenraum 26 abgewandten Außenseite 46 übergreifend positioniert werden kann.

Anschließen an den ersten Anbindungsbereich 44 weist die bzw. jede Eingriffslasche 42 einen ersten Laschenabschnitt 48 auf. Der erste Laschenabschnitt 48 erstreckt sich ausgehend vom ersten Anbindungsbereich 44 im Wesentlichen geradlinig in Richtung auf den Gehäuseinnenraum 26 zu, also von einer Außenseite 50 des zweiten Gehäuseschalenbereichs 14 weg. In einem von dem ersten Anbindungsbereich 44 entfernten Endbereich geht der erste Laschenabschnitt 48 in einem zweiten Anbindungsbereich 51 über in einen zweiten Laschenabschnitt 52. Ebenso wie der erste Anbindungsbereich 44 kann auch der zweite Anbindungsbereich 51 durch Umformen eines zum Aufbau des zweiten Gehäuseschalenbereichs 14 eingesetzten Blechrohlings erhalten werden. Der zweite Laschenabschnitt 52 erstreckt sich ausgehend vom zweiten Anbindungsbereich 51 beispielsweise im Wesentlichen geradlinig näherungsweise in Richtung auf den ersten Anbindungsbereich 44 zu, wobei, wie die Fig. 2 und 3 dies deutlich zeigen, die beiden Laschenabschnitte 48, 52 eine vom zweiten Anbindungsbereich 51 ausgehende, zueinander divergierende Lage einnehmen. Somit stellen die beiden Laschenabschnitte 48, 52 eine im Wesentlichen V-förmige Gestalt bereit. Dabei ist die Erstreckungslänge des ersten Laschenabschnitts 48 zwischen dem ersten Anbindungsbereich 44 und dem zweiten Anbindungsbereich 51 größer, als die Erstreckungslänge des zweiten Laschenabschnitts 52 ausgehend vom zweiten Anbindungsbereich 51. Somit ist ein freier Endbereich 54 des zweiten Laschenabschnitts 52 bezüglich des ersten Anbindungsbereichs 51 bzw. der Gehäuseumfangswandung 20 des zweiten Gehäuseschalenbereichs 14 in Richtung zum Gehäuseinnenraum 26 versetzt.

Aufgrund der Ausgestaltung des zweiten Gehäuseschalenbereichs 14 aus grundsätzlich elastisch verformbarem Blechmaterial ist die Eingriffslasche 42 im Bereich der beiden Laschenabschnitte 48, 52 und auch im zweiten Anbindungsbereich 51 elastisch verformbar. Die beiden Laschenabschnitte 48, 52 können somit bei entsprechender Beaufschlagung grundsätzlich einander angenähert werden. Wird diese Beaufschlagung aufgegeben, kehren die beiden Laschenabschnitte 48, 52 wieder in ihre in den Fig. 2 und 3 dargestellte bezüglich einander divergierende Konfiguration zurück.

Zum Verbinden der beiden Gehäuseschalenbereiche 12, 14 im Verbindungsbereich 16 werden die den Eingriffsöffnungen 38 im ersten Gehäuseschalenbereich 12 zugeordneten Eingriffslaschen 42 von der Außenseite 46 des ersten Gehäuseschalenbereichs 12 bzw. der Gehäuseumfangswandung 18 desselben in die diesen jeweils zugeordneten Eingriffsöffnungen 38 eingeführt. Da die Eingriffsöffnungen 38 in Umfangsrichtung um die Gehäuselängsachse A eine geringere Ausdehnung aufweisen, als die in V-förmiger Konfiguration zueinander liegenden Laschenabschnitte 48, 52, wird beim Einführen einer jeweiligen Eingriffslasche 42 in eine Eingriffsöffnung 38 der zweite Laschenabschnitt 52 mit seinem freien Endbereich 54 unter Abgleitbewegung an einem Randbereich 56 der diesen aufnehmenden Eingriffsöffnung 38 auf den ersten Laschenabschnitt 48 zu bewegt. Ist die Eingriffslasche 42 vollständig in die zugehörige Eingriffsöffnung 38 eingeschoben, so dass der erste Laschenabschnitt 48 von der Außenseite 46 her in die Eingriffsöffnung 38 eingreifend bzw. diese durchgreifend positioniert ist, ist der zweite Laschenabschnitt 52 vollständig durch diese Eingriffsöffnung hindurch bewegt, so dass der Randbereich 56 den zweiten Laschenabschnitt 52 wieder freigibt und dieser in seine Ursprungsposition zurückfedern kann. In diesem Zustand hintergreift der zweite Laschenabschnitt 52 mit seinem freien Endbereich 54 die Gehäuseumfangswandung 18 des ersten Gehäuseschalenbereichs 12 an deren Innenseite 32. Es ist somit nach Art einer Verrastung eine Formschlussverbindung der beiden Gehäuseschalenbereiche 12, 14 erzeugt. Aufgrund der die Gehäuseumfangswandung 18 des ersten Gehäuseschalenbereichs 14 hintergreifenden zweiten Laschenabschnitte 52 aller in zugeordnete Eingriffsöffnungen 38 eingreifenden Eingriffslaschen 42 ist ein Loslösen der beiden Gehäuseschalenbereiche 12, 14 voneinander nicht möglich und es wird eine stabile Verbindung derselben miteinander gewährleistet.

In Umfangsrichtung liegen die beiden Gehäuseschalenbereiche 12, 14 im Verbindungsbereich 16 bzw. in jedem derart gestalteten Verbindungsbereich über die nach innen, also zur Gehäuseinnenwand 26 hin gerichteten Anlageränder 22, 24 aneinander an. Nach außen gerichtete Randbereiche, wie sie beispielsweise zum Umfalzen und dadurch Herstellen einer formschlüssigen Verbindung erforderlich wären, sind bei dem erfindungsgemäßen Aufbau des Gehäuses 10 nicht vorgesehen. Lediglich dort, wo im jeweiligen ersten Anbindungsbereich 44 die Gehäuseumfangswandung 20 des zweiten Gehäuseschalenbereichs 14 geringfügig nach außen verformt ist, um den in Fig. 3 erkennbaren Übergriff in Umfangsrichtung ermöglichen zu können, ist ein geringfügiger radialer Überstand vorhanden. Dieser könnte dadurch eliminiert werden, dass im ersten Anbindungsbereich 44 nicht der zweite Gehäuseschalenbereich 14 nach außen verformt ist, sondern dass in einem dem ersten Anbindungsbereich 44 entsprechenden Bereich des ersten Gehäuseschalenbereichs 12 eine nach innen gerichtete Einformung vorhanden ist, in welche der zweite Gehäuseschalenbereich 14 mit seinem jeweiligen ersten Anbindungsbereich 44 eintauchend positioniert werden kann, so dass im Wesentlichen über den ganzen Umfang ein bündiger und ohne Vorstände nach außen bereitgestellter Verlauf der Außenseiten 46, 50 der beiden Gehäuseschalenbereiche 12, 14 vorgesehen ist.

Da die beiden Gehäuseschalenbereiche 12, 14 aus grundsätzlich elastisch verformbarem Blechmaterial aufgebaut sind, ist es auch leicht möglich, diese an bezüglich der Gehäuselängsachse A einander näherungsweise gegenüberliegenden Verbindungsbereichen in der mit Bezug auf die Fig. 3 beschriebenen Art und Weise zu verbinden. Hierzu kann beispielsweise der zweite Gehäuseschalenbereich 14 zunächst in einem der Verbindungsbereiche mit dem ersten Gehäuseschalenbereich 12 verbunden werden, woraufhin im anderen der beiden Verbindungsbereiche die beiden Gehäuseschalenbereiche 12, 14 radial bezüglich der Gehäuselängsachse A verformt werden, so dass die Eingriffslaschen 42 am zweiten Gehäuseschalenbereich 14 dann von außen her in die zugeordneten Eingriffsöffnungen 38 am ersten Gehäuseschalenbereich 12 eingeführt werden können.

Nach hergestelltem Eingriff sind die in dem ersten Gehäuseschalenbereich 12 vorgesehenen Eingriffsöffnungen 38 durch die in diese eingreifend positionierten Eingriffslaschen 42 nahezu vollständig verschlossen, so dass auch das Eindringen von Verunreinigungen oder zu Wärmeverlusten führende Luftströmungen weitestgehend unterbunden werden können.

Abschließend ist darauf hinzuweisen, dass selbstverständlich bei derartiger Verbindung zweier Gehäuseschalenbereiche miteinander die Anzahl bzw. der gegenseitige Abstand der Eingriffsöffnungen 38 und dementsprechend auch der Eingriffslaschen 42 sowie deren Ausdehnung insbesondere in Richtung der Gehäuselängsachse A variieren können. So können beispielsweise dort, wo besonders hohe mechanische Belastungen zu erwarten sind, mehr oder/und größer dimensionierte Eingriffsöffnungen 38 bzw. Eingriffslaschen 42 vorgesehen sein bzw. können Eingriffsöffnungen 38 bzw. Eingriffslaschen 42 mit geringerem gegenseitigem Abstand angeordnet sein.

Durch die erfindungsgemäße Verbindung zweier Gehäuseschalenbereiche miteinander werden nach außen vorstehenden scharfkantige Bereiche vermieden. Die Verbindung der beiden Gehäuseschalenbereiche kann durch das Einrasten der Eingriffslaschen herbeigeführt werden, so dass auch keine zusätzlichen Arbeitsvorgänge, wie z. B. das Umfalzen von Blechbereichen, durchzuführen sind. Auch Vorgänge zum Erzeugen materialschlüssigen Verbindungen, wie z. B. ein Verschweißen der beiden Gehäuseschalenbereiche, sind nicht erforderlich. Jeder der Gehäuseschalenbereiche kann mit den daran vorzusehenden Eingriffsformationen aus einem einzigen Blechstück durch Ausschneiden und dann Umformen hergestellt werden.

Während die erfindungsgemäße Ausgestaltung eines Gehäuses bzw. der beiden Eingriffsformationen der Gehäuseschalenbereiche besonders bevorzugt Anwendung finden kann, wenn ein diese Eingriffsformationen aufweisender Verbindungsbereich sich beispielsweise in Richtung einer Gehäuselängsachse im Wesentlichen geradlinig erstreckend ausgebildet ist, kann grundsätzlich auch eine gekrümmte Kontur des Verbindungsbereichs und somit ein entsprechend gekrümmter Verlauf der beiden Gehäuseschalenbereiche in ihren aneinander anliegenden Bereichen, beispielsweise den Anlagerändern, vorgesehen sein. Angepasst an den Verlauf des Verbindungsbereichs können dann auch die Eingriffsöffnungen bzw. Eingriffslaschen in einer dem gekrümmten Verlauf des Verbindungsbereichs folgenden Positionierung bzw. Orientierung vorgesehen werden.

## Patentansprüche

1. Gehäuse für eine Abgasanlage einer Brennkraftmaschine eines Fahrzeugs, umfassend wenigstens zwei einen Gehäuseinnenraum (26) umgrenzende und in wenigstens einem Verbindungsbereich (16) miteinander verbundene Gehäuseschalenbereiche (12, 14), wobei ein erster Gehäuseschalenbereich (12) der beiden in dem wenigstens einen Verbindungsbereich (16) miteinander verbundenen Gehäuseschalenbereiche (12, 14) in dem wenigstens einen Verbindungsbereich (16) eine erste Eingriffsformation (36) aufweist und ein zweiter Gehäuseschalenbereich (14) der beiden in dem wenigstens einen Verbindungsbereich (16) miteinander verbundenen Gehäuseschalenbereiche (12, 14) in dem wenigstens einen Verbindungsbereich (16) eine mit der ersten Eingriffsformation (36) in Formschlusseingriff stehende oder bringbare zweite Eingriffsformation (40) aufweist, wobei die erste Eingriffsformation (36) wenigstens eine Eingriffsöffnung (38) umfasst und die zweite Eingriffsformation (40) in Zuordnung zu der wenigstens einen Eingriffsöffnung (38) der ersten Eingriffsformation (36) wenigstens eine in die wenigstens eine Eingriffsöffnung (38) eingreifende Eingriffslasche (42) umfasst, wobei die wenigstens eine Eingriffslasche (42) einen an den zweiten Gehäuseschalenbereich (14) angebundenen und bei miteinander verbundenen Gehäuseschalenbereichen (12, 14) durch die zugeordnete Eingriffsöffnung (38) hindurchgreifenden ersten Laschenabschnitt (48) umfasst und einen an den ersten Laschenabschnitt (48) anschließenden und den ersten Gehäuseschalenbereich (12) hintergreifenden zweiten Laschenabschnitt (52) umfasst,
**dadurch gekennzeichnet, dass** die wenigstens eine Eingriffslasche (42) von einer von dem Gehäuseinnenraum (26) abgewandt orientierten Außenseite (46) des ersten Gehäuseschalenbereichs (12) her in die zugeordnete Eingriffsöffnung (38) eingreifend positioniert oder positionierbar ist, und dass der erste Laschenabschnitt (48) ausgehend von einem ersten Anbindungsbereich (44) des ersten Laschenabschnitts (48) an den zweiten Gehäuseschalenbereich (14) sich in Richtung auf den Gehäuseinnenraum (26) zu erstreckt, und dass der zweite Laschenabschnitt (52) ausgehend von einem zweiten Anbindungsbereich (51) des zweiten Laschenabschnitts (52) an den ersten Laschenabschnitt (48) sich näherungsweise in Richtung auf den ersten Anbindungsbereich (44) zu erstreckt.

2. Gehäuse nach Anspruch 1, **dadurch gekennzeichnet, dass** der erste Laschenabschnitt (48) ausgehend vom ersten Anbindungsbereich (44) eine größere Erstreckungslänge aufweist, als der zweite Laschenabschnitt (52) ausgehend vom zweiten Anbindungsbereich (51).

3. Gehäuse nach Anspruch 1 oder 2, **dadurch gekennzeichnet, dass** bei durch die zugeordnete Eingriffsöffnung (38) hindurchgreifendem erstem Laschenabschnitt (48) der erste Laschenabschnitt (48) und der zweite Laschenabschnitt (52) sich ausgehend vom zweiten Anbindungsbereich (51) bezüglich einander divergierend erstrecken.

4. Gehäuse nach einem der Ansprüche 1-3, **dadurch gekennzeichnet, dass** der erste Laschenabschnitt (48) und der zweite Laschenabschnitt (52) im zweiten Anbindungsbereich (51) derart elastisch federnd aneinander angebunden sind oder/und dass der erste Laschenabschnitt (48) oder/und der zweite Laschenabschnitt (52) derart elastisch federnd ausgebildet ist, dass zum Einführen der Eingriffslasche (42) in die zugeordnete Eingriffsöffnung (38) die beiden Laschenabschnitte (48, 52) aufeinander zu bewegbar sind und bei in die zugeordnete Eingriffsöffnung (38) eingeführter Eingriffslasche (42) die beiden Laschenabschnitte (48, 52) in eine derartige Positionierung bezüglich einander kommen, dass der zweite Laschenabschnitt (56) den ersten Gehäuseschalenbereich (12) an seiner dem Gehäuseinnenraum (26) zugewandten Innenseite (32) hintergreift.

5. Gehäuse nach einem der vorangehenden Ansprüche, **dadurch gekennzeichnet, dass** die erste Eingriffsformation (36) eine Mehrzahl von in Richtung einer Gehäuselängsachse (A) aufeinander folgenden Eingriffsöffnungen (38) umfasst und die zweite Eingriffsformation (40) eine Mehrzahl von in Richtung der Gehäuselängsachse (A) aufeinander folgenden Eingriffslaschen (42) umfasst.

6. Gehäuse nach einem der vorangehenden Ansprüche, **dadurch gekennzeichnet, dass** in dem wenigstens einen Verbindungsbereich (16) der erste Gehäuseschalenbereich (12) einen von einer Gehäuseumfangswandung (18) des ersten Gehäuseschalenbereichs (12) in Richtung zum Gehäuseinnenraum (26) sich erstreckenden ersten Anlagerand (22) aufweist, oder/und dass in dem wenigstens einen Verbindungsbereich (16) der zweite Gehäuseschalenbereich (14) einen von einer Gehäuseumfangswandung (20) des zweiten Gehäuseschalenbereichs (14) in Richtung zum Gehäuseinnenraum (26) sich erstreckenden zweiten Anlagerand (24) aufweist.

7. Gehäuse nach einem der vorangehenden Ansprüche, **dadurch gekennzeichnet, dass** in dem wenigstens einen Verbindungsbereich (16) die wenigstens eine Eingriffsöffnung (38) der ersten Eingriffsformation (36) in einer Gehäuseumfangswandung (18) des ersten Gehäuseschalenbereichs (12) vorgesehen ist.

8. Gehäuse nach einem der vorangehenden Ansprüche, **dadurch gekennzeichnet, dass** der erste Gehäuseschalenbereich (12) und der zweite Gehäuseschalenbereich (14) in zwei im Wesentlichen in Richtung einer Gehäuselängsachse (A) sich erstreckenden Verbindungsbereichen (16) miteinander verbunden sind.

9. Abgasanlage für eine Brennkraftmaschine, insbesondere für ein Fahrzeug, umfassend eine vom einem Gehäuse (10) nach einem der vorangehenden Ansprüche umgebene Abgasbehandlungseinheit.

## Claims

1. Housing for an exhaust system of an internal combustion engine of a vehicle, comprising at least two housing shell areas (12, 14), which enclose a housing interior (26) and are connected to one another in at least one connection area (16), wherein a first housing shell area (12) of the two housing shell areas (12, 14) connected to one another in the at least one connection area (16) has a first meshing formation (36) in the at least one connection area (16) and a second housing shell area (14) of the two housing shell areas (12, 14) connected to one another in the at least one connection area (16) has a second meshing formation (40), which is or can be brought into positive-locking meshing with the first meshing formation (36), wherein the first meshing formation (36) comprises at least one meshing opening (38) and the second meshing formation (40) comprises at least one meshing strap (42) meshing with the at least one meshing opening (38) in association with the at least one meshing opening (38) of the first meshing formation (36), wherein the at least one meshing strap (42) comprises a first strap section (48), which is connected to the second housing shell area (14) and passes through the associated meshing opening (38) when the housing shell areas (12, 14) are connected to one another and comprises a second strap section (52), which adjoins the first strap section (48) and extends behind the first housing shell area (12),
**characterized in that**
the at least one meshing strap (42) is or can be positioned such that it meshes with the associated meshing opening (38) from an outer side (46) of the first housing shell area (12), which outer side is oriented such that it faces away from the housing interior (26), and that
the first strap section (48) extends starting from a first bonding area (44) of the first strap section (48) to the second housing shell area (14) in the direction of the housing interior (26), and that the second strap section (52) extends starting from a second bonding area (51) of the second strap section (52) to the first strap section (48) approximately in the direction of the first bonding area (44).

2. Housing in accordance with claim 1, **characterized in that** the first strap section (48) has, starting from the first bonding area (44), a greater length of extension than the second strap section (52) starting from the second bonding area (51).

3. Housing in accordance with claim 1 or 2, **characterized in that** when the first strap section (48) passes through the associated meshing opening (38), the first strap section (48) and the second strap section (52) extend diverging from one another starting from the second bonding area (51).

4. Housing in accordance with one of the claims 1-3, **characterized in that** the first strap section (48) and the second strap section (52) are bonded to one another in the second bonding area (51) in an elastically flexible manner and/or the first strap section (48) or/and the second strap section (52) are configured in an elastically flexible manner such that the two strap sections (48, 52) can be moved towards one another for inserting the meshing strap (42) into the associated meshing opening (38) and when the meshing strap (42) has been inserted into the associated meshing opening (38), the two strap sections (48, 52) will be positioned in relation to one another such that the second strap section (56) extends behind the first housing shell area (12) on the inner side (32) thereof, which faces the housing interior (26).

5. Housing in accordance with one of the preceding claims, **characterized in that** the first meshing formation (36) comprises a plurality of meshing openings (38) following one another in the direction of a housing longitudinal axis (A) and the second meshing formation (40) comprises a plurality of meshing straps (42) following one another in the direction of the housing longitudinal axis (A).

6. Housing in accordance with one of the preceding claims, **characterized in that** in the at least one connection area (16), the first housing shell area (12) has a first contact edge (22) extending from a housing circumferential wall (18) of the first housing shell area (12) in the direction of the housing interior (26), or/and that in the at least one connection area (16) the second housing shell area (14) has a second contact edge (24) extending from a housing circumferential wall (20) of the second housing shell area (14) in the direction of the housing interior (26).

7. Housing in accordance with one of the preceding claims, **characterized in that** in the at least one connection area (16) the at least one meshing opening (38) of the first meshing formation (36) is provided in a housing circumferential wall (18) of the first housing shell area (12).

8. Housing in accordance with one of the preceding claims, **characterized in that** the first housing shell area (12) and the second housing shell area (14) are connected to one another in two connection areas (16) extending essentially in the direction of a housing longitudinal axis (A).

9. Exhaust system for an internal combustion engine, especially for a vehicle, comprising an exhaust gas treatment unit enclosed by a housing (10) in accordance with one of the preceding claims.

## Revendications

1. Boîtier pour un système de gaz d'échappement d'un moteur à combustion interne d'un véhicule, comprenant au moins deux zones de coque de boîtier (12, 14) qui entourent un espace intérieur de boîtier (26) et qui sont reliées entre elles dans au moins une zone de liaison (16), dans lequel une première zone de coque de boîtier (12) des deux zones de coque de boîtier reliées l'une à l'autre dans ladite au moins une zone de liaison (16) présente une première formation d'engagement (36) dans ladite au moins une zone de liaison (16) et une deuxième zone de coque de boîtier (14) des deux zones de coque de boîtier (12, 14) reliées l'une à l'autre dans ladite au moins une zone de liaison (16) présente une deuxième formation d'engagement (40), qui est ou peut être mise en prise par complémentarité de forme avec la première formation d'engagement (36), dans lequel la première formation d'engagement (36) comprend au moins une ouverture d'engagement (38) et la deuxième formation d'engagement (40) comprend au moins une patte d'engagement (42) s'engrenant avec ladite au moins une ouverture d'engagement (38) en association avec ladite au moins une ouverture d'engagement (38) de la première formation d'engagement (36), dans lequel ladite au moins une patte d'engagement (42) comprend une première section de patte (48) qui est reliée à la deuxième zone de coque de boîtier (14) et traverse l'ouverture d'engagement (38) associée lorsque les zones de coque de boîtier (12, 14) sont reliées l'une à l'autre, et comprend une deuxième section de patte (52), qui se raccorde à la première section de patte (48) et s'étend derrière la première zone de coque de boîtier (12),
**caractérisé en ce que**
ladite au moins une patte d'engagement (42) est ou peut être positionnée de telle sorte qu'elle s'engrène avec l'ouverture d'engagement associée (38) depuis un côté extérieur (46) de la première zone de coque de boîtier (12), lequel côté extérieur est orienté de telle sorte qu'il est orienté à l'opposé de l'intérieur de boîtier (26), et **en ce que**
la première section de patte (48) s'étend à partir d'une première zone de liaison (44) de la première section de patte (48) vers la deuxième zone de coque de boîtier (14) en direction de l'intérieur de boîtier (26), et que la deuxième section de patte (52) s'étend à partir d'une deuxième zone de liaison (51) de la deuxième section de patte (52) vers la première section de patte (48) approximativement en direction de la première zone de liaison (44).

2. Boîtier selon la revendication 1, **caractérisé en ce que** la première section de patte (48) présente, à partir de la première zone de liaison (44), une plus grande longueur d'extension que la deuxième section de patte (52) à partir de la deuxième zone de liaison (51).

3. Boîtier selon la revendication 1 ou 2, **caractérisé en ce que**, lorsque la première section de patte (48) traverse l'ouverture d'engagement (38) associée, la première section de patte (48) et la deuxième section de patte (52) s'étendent en divergeant l'une de l'autre à partir de la deuxième zone de liaison (51).

4. Boîtier selon l'une des revendications 1 à 3, **caractérisé en ce que** la première section de patte (48) et la deuxième section de patte (52) sont liées l'une à l'autre dans la deuxième zone de liaison (51) de manière élastiquement flexible et/ou la première section de patte (48) et/ou la deuxième section de patte (52) sont configurées de manière élastiquement flexible de telle sorte que les deux sections de patte (48, 52) peuvent être déplacées l'une vers l'autre pour introduire la patte d'engagement (42) dans l'ouverture d'engagement associée (38) et, lorsque la patte d'engagement (42) a été introduite dans l'ouverture d'engagement associée (38), les deux sections de patte (48, 52) sont positionnées l'une par rapport à l'autre de telle sorte que la deuxième section de patte (56) s'étend derrière la première zone de coque de boîtier (12) sur son côté intérieur (32) tourné vers l'intérieur de boîtier (26).

5. Boîtier selon l'une des revendications précédentes, **caractérisé en ce que** la première formation d'engagement (36) comprend une pluralité d'ouvertures d'engagement (38) se succédant dans la direction d'un axe longitudinal du boîtier (A) et la deuxième formation d'engagement (40) comprend une pluralité de pattes d'engagement (42) se succédant dans la direction de l'axe longitudinal du boîtier (A).

6. Boîtier selon l'une des revendications précédentes, **caractérisé en ce que** dans ladite au moins une zone de liaison (16), la première zone de coque de boîtier (12) présente un premier bord de contact (22) s'étendant depuis une paroi périphérique de boîtier (18) de la première zone de coque de boîtier (12) en direction de l'intérieur de boîtier (26), ou/et que dans ladite au moins une zone de liaison (16), la deuxième zone de coque de boîtier (14) a un deuxième bord de contact (24) s'étendant depuis une paroi circonférentielle de boîtier (20) de la deuxième zone de coque de boîtier (14) en direction de l'intérieur de boîtier (26).

7. Boîtier selon l'une des revendications précédentes, **caractérisé en ce que** dans ladite au moins une zone de liaison (16), ladite au moins une ouverture d'engagement (38) de la première formation d'engagement (36) est prévue dans une paroi périphérique de boîtier (18) de la première zone de coque de boîtier (12).

8. Boîtier selon l'une des revendications précédentes, **caractérisé en ce que** la première zone de coque de boîtier (12) et la deuxième zone de coque de boîtier (14) sont reliées l'une à l'autre dans deux zones de liaison (16) s'étendant essentiellement dans la direction d'un axe longitudinal du boîtier (A).

9. Système de gaz d'échappement pour un moteur à combustion interne, notamment pour un véhicule, comprenant une unité de traitement des gaz d'échappement entourée par un boîtier (10) selon l'une des revendications précédentes.
